# FASCICULE DE BREVET EUROPEEN

(11) **EP 2 737 118 B1**
(45) Date de publication et mention de la délivrance du brevet: **01.07.2015**
(21) Numéro de dépôt: 12740963.9
(22) Date de dépôt: 26.07.2012
(51) Int. Cl.: D04H 1/02, D04H 1/64, D04H 1/72, D04H 1/74, D04H 1/498, D04H 1/425, D04H 1/49, D06B 5/08, D06L 1/12, D06L 3/02, D06L 3/04, D06L 3/06, B32B 5/26, D04H 1/04

(54) **PRODUIT FIBREUX ABSORBANT CONTENANT AU MOINS 50% DE FIBRES CELLULOSIQUES HYDROPHILES ET COMPRENANT AU MOINS DEUX COUCHES DONT L'UNE EST HYDROLIEE**
SAUGFÄHIGE FASERZUSAMMENSETZUNG MIT MINDESTENS 50% HYDROPHILEN CELLULOSEFASERN UND MIT MINDESTENS ZWEI SCHICHTEN, EINE DAVON WASSERSTRAHLVERFESTIGT
ABSORBENT FIBROUS PRODUCT CONTAINING AT LEAST 50% OF HYDROPHILIC CELLULOSE FIBERS AND INCLUDING AT LEAST TWO LAYERS, ONE OF WHICH IS HYDROENTANGLED

(30) Priorité: 28.07.2011 FR 1156912
(43) Date de publication de la demande: 04.06.2014
(73) Titulaire: SCA Tissue France, 92270 Bois-Colombes (FR)
(72) Inventeur: LOUIS DIT PICARD, Bernard, F-27370 Saint Nicolas Du Bosc (FR); GREGOIRE, Philippe, F-27700 Les Andelys (FR); BRET, Bruno, F-68920 Wintzenheim (FR)
(74) Mandataire: Gevers France
(86) Numéro de dépôt international: PCT/EP2012/064749
(87) Numéro de publication internationale: WO 2013/014259

(56) Documents cités:
- EP-A1- 0 735 175
- EP-A1- 1 106 723
- EP-A1- 1 167 605
- EP-A2- 0 210 777
- WO-A1-2006/084991
- DE-A1- 3 932 032
- FR-A1- 2 701 040
- WATZL A ET AL: "SPUNLACE//COTTON PADS UND ANDERE PRODUKTE", AVR ALLGEMEINER VLIESSTOFF REPORT, DPW VERLAGSGESELLSCHAFT MBH., HEUSENSTAMM, DE, vol. 29, no. 1, 1 janvier 2001 (2001-01-01), page 30/31, XP001081197, ISSN: 0170-4060

## Description

L'invention concerne un produit fibreux absorbant contenant au moins 50% de fibres cellulosiques hydrophiles telles que des fibres de coton hydrophile, et les nouveaux produits obtenus à partir de la transformation de ce produit, en particulier de sa découpe.

### Etat de la technique

Les produits fibreux ou nappes fibreuses constituées de fibres de coton sont utilisées, par exemple, pour préparer des produits découpés ou prédécoupés sous forme paquetée, c'est-à-dire sous la forme d'une bande pliée en accordéon et emballée dans un sachet, que l'on extrait à la demande. Ce type de produit est destiné principalement aux soins dermatologiques et chirurgicaux.

La nappe peut être aussi découpée sous la forme de tampons ou formats individualisés du type disques, rondelles, carrés ou encore toutes autres formes, destinés aux soins de la peau, principalement du visage pour le démaquillage ou à la toilette des bébés.

Un procédé usuel de fabrication d'une nappe de coton hydrophile, à partir de fibres écrues comprend une étape de traitement de la fibre qui consiste à soumettre la fibre écrue aux opérations successives de nettoyage et d'ouvraison, à un traitement consistant à enlever les graisses et les cires, au moyen d'une solution de débouillissage à base de soude pour rendre le coton hydrophile, suivi d'un rinçage et éventuellement d'un exprimage, puis à un traitement de blanchiment au moyen par exemple d'eau oxygénée ou peroxyde d'hydrogène. Le traitement peut aussi être un blanchiment combiné en une seule étape : débouillissage et blanchiment. Le coton blanchi est éventuellement traité au moyen de lubrifiants et/ou d'adoucissants (ensimages).

Le coton ainsi traité est transformé par des cardes, qui alignent les fibres pour former des voiles, et / ou un ou plusieurs nappeurs pneumatiques. Plusieurs voiles de carde sont pliés dans le sens de production pour avoir la largeur désirée et former une nappe. Cette dernière est alors pliée en accordéon pour être empaquetée.

La nappe peut être éventuellement prédécoupée avant conditionnement.

On peut aussi utiliser éventuellement une ou des machines de nappage pneumatique à la place ou en complément des cardes.

Le produit de coton ainsi fabriqué a un aspect très pelucheux et s'effiloche facilement. De plus, la nappe prédécoupée ou découpée se délamine facilement, les voiles de carde se désolidarisant les uns des autres. C'est notamment le cas lorsque le coton est non prédécoupé.

En ce qui concerne les produits de coton en formats, un mode de fabrication comprend le mélange de fibres thermofusibles au coton. La nappe est ensuite formée sur un nappeur pneumatique et/ou sur des cardes. Elle passe dans un four du type à "air chaud traversant" dont la température est suffisante pour fondre les fibres synthétiques. Lorsqu'elles fondent, ces fibres forment un liant entre les fibres de coton et procurent à la nappe après refroidissement une cohésion suffisante pour les usages auxquels le produit est destiné. Après refroidissement de la nappe, celle-ci est découpée pour réaliser des formats.

Un autre procédé de fabrication d'une nappe destinée à des produits en formats est décrit dans la demande de brevet français FR 2 552 120. Ce procédé consiste à effectuer le traitement chimique de débouillissage et de blanchiment sur une nappe écrue déjà formée, enroulée sur un cylindre creux comportant des perforations sur sa surface, le cylindre étant ensuite placé dans un corset. On fait circuler les liquides de traitement radialement au travers des spires de la bobine formée par la nappe dans un autoclave, de manière telle qu'il s'établisse une pression différentielle entre le liquide entrant dans la bobine et le liquide en sortant. Cette pression différentielle a pour conséquence d'augmenter la cohésion de la nappe. Après traitement celle-ci est rincée, séchée puis découpée en formats sous la forme de rondelles.

La demanderesse a développé par ailleurs un procédé de traitement en continu décrit dans le brevet FR 2 701 040.

Un mélange de fibres de coton subit un traitement préalable limité à l'ouvraison et au nettoyage puis trois couches sont formées. La première couche est constituée d'un voile de carde obtenu notamment au moyen d'une carde de type pêle-mêle. La seconde couche est obtenue par voie pneumatique sur une machine du type Rando. Les fibres de la couche déposée par voie pneumatique sont orientées de manière sensiblement oblique par rapport aux plans inférieur et supérieur horizontaux de la nappe. La troisième couche est constituée d'un voile de carde similaire à la première couche.

La nappe est ensuite entraînée par un tapis vers différents postes de traitement en ligne continue. La nappe est d'abord imprégnée d'une solution de débouillissage appliquée sous la forme d'une lame liquide déversée transversalement à sa direction de déplacement. La solution est aspirée au travers de la nappe au moyen d'une fente d'aspiration disposée sous la toile. La nappe est introduite après imprégnation dans un vaporiseur chauffé à une température voisine de 100°C dans lequel elle séjourne, tout en restant continue, le temps nécessaire au traitement. La nappe est ensuite rincée et le jus de débouillissage extrait au moyen d'une deuxième lame liquide et d'une fente à vide associée. La nappe débouillie, hydrophile, est imprégnée avec une solution de blanchiment de la même manière que pour le traitement de débouillissage et la nappe est ensuite introduite dans un autre vaporiseur. Après blanchiment, la nappe est rincée et son pH neutralisé par application d'une succession de lames liquides associées à des fentes aspirantes.

Ce traitement de la nappe confère une certaine adhérence entre les couches la constituant et une bonne cohésion à l'ensemble ; la résistance à la délamination et au peluchage est améliorée et la surface reste très douce au toucher. Après son séchage, la nappe peut être utilisée directement pour la préparation de coton hydrophile paqueté ou découpée en formats.

La demanderesse a ensuite complété ce procédé, par un perfectionnement décrit dans le brevet européen EP 0 805 888 B1. Ce perfectionnement porte sur une étape de rinçage au moyen de jets d'eau à haute pression, qui apportent une énergie mécanique sur les surfaces traitées, permettant l'entrelacement des fibres de surface et l'amélioration des résistances de la nappe traitée, ainsi que la cohésion des voiles de surface avec le matelas central. On note cependant un inévitable compactage de la nappe, lié à l'apport d'énergie hydraulique, subi par l'ensemble de la nappe, la conséquence principale étant une légère perte d'épaisseur par rapport à la nappe traitée par le procédé de rinçage plus conventionnel tel que décrit dans la demande de brevet FR 2 701 040.

Le document WO 2006/084991 décrit la fabrication d'un produit fibreux absorbant contenant majoritairement des fibres de coton hydrophile sans liant chimique ni thermofusible. Il comporte au moins deux couches dont l'une est plus faiblement liée. Ces couches sont liées par des jets d'eau sous pression.

### Exposé de l'invention

Il est des applications où l'on recherche à la fois volume et résistance mécanique, par exemple pour les tampons de nettoyage ou bien à démaquiller.

Le présent déposant s'est donc fixé comme objectif la mise au point d'un produit à la fois plus volumineux et au moins aussi résistant ou encore plus résistant pour un même volume que le produit obtenu selon l'art antérieur présenté ci-dessus et notamment selon la technique de blanchiment continu décrite dans le brevet FR 2 701 040, combinée éventuellement à la technique de rinçage décrite dans le brevet EP 0 805 888 B1.

Conformément à l'invention, le produit fibreux nouveau présentant les propriétés visées ci-dessus, contenant au moins 50 % de fibres de coton hydrophiles ou autres fibres cellulosiques hydrophiles et moins de 0,1% de liant chimique ou thermofusible, comprend une première couche formée d'un non-tissé hydrolié et une deuxième couche formée de fibres plus faiblement liées que dans la première couche, la liaison des fibres dans la deuxième couche résultant d'un traitement hydrophile de la couche de fibres, les deux couches étant liées par adhérence toute surface entre les fibres des deux couches, et la force de décohésion du produit étant d'au moins 0,1 N.

Il en découle que la force de décohésion entre les deux couches est aussi d'au moins 0,1 N. La force de décohésion du produit est de préférence inférieure à 1 N.

Le non-tissé hydrolié confère de la résistance mécanique au produit. Cette résistance se mesure sur le produit dans son intégralité. La résistance à la traction est d'au moins 1N/25mm.

Les méthodes de détermination de la résistance à la traction et de la force de décohésion sont les suivantes.

La mesure de la résistance à la traction est effectuée au moyen d'un dynamomètre. On place un échantillon de 25 millimètres de large entre deux mâchoires écartées de 30 millimètres, dans le sens de la longueur de l'échantillon. On écarte les mâchoires à une vitesse de 100 mm/min et on mesure la force maximale exercée avant rupture. Cette force maximale est la résistance à la traction.

La force de décohésion du produit est mesurée de la façon suivante : On utilise un dynamomètre, par exemple de la marque Adamel Lhomargy DY 30 (n°61060 de juillet 1995), muni d'un capteur 100N. A la place de chaque pince, le dynamomètre est équipé d'un plateau horizontal sur lequel on place à chaque essai un ruban adhésif double face. On place le produit sous la forme d'un disque échantillon entre deux plateaux solidaires chacun d'un bras du dynamomètre. Le disque est maintenu au moyen de rubans adhésifs double face (dimensions 60x60 mm pour les tampons de 57 mm de diamètre). On presse les plateaux l'un contre l'autre à 7N. On tire ensuite à 100 mm/min et on relève la valeur maximale de la force de décohésion jusqu'à la séparation des plateaux. La force de décohésion du produit retenue est la moyenne de cette force mesurée sur cinq échantillons de même type.

L'adhérence toute surface implique que les deux couches sont liées le long des deux faces en contact l'une avec l'autre et pas seulement sur une partie de leur surface en contact, telle que la périphérie.

La combinaison de l'invention permet ainsi d'associer les caractéristiques de résistance à la traction venant essentiellement de la couche hydroliée et de volume venant de la couche formée de fibres plus faiblement liées.

Selon l'invention, on peut obtenir un produit fini présentant une aussi bonne résistance à la traction qu'un produit hydrolié toute épaisseur à grammage sensiblement égal tout en ayant une plus grande épaisseur. On peut également fournir un produit ayant une plus grande résistance à la traction pour une même épaisseur.

De préférence, le produit comprend au moins une troisième couche, formée également d'un non-tissé hydrolié, les trois couches étant liées entre elles par une adhérence toute surface résultant d'un traitement visant à rendre hydrophile les fibres de la nappe complexe initialement écrues.

La deuxième couche est avantageusement obtenue par voie pneumatique, par exemple au moyen d'un formeur de nappe de type Rando ou bien par superposition de voiles de carde. La première couche, le cas échéant la troisième, est formée de voiles de carde et a été soumise à un traitement d'hydroliage.

L'invention fournit donc un produit n'incorporant pratiquement pas d'adhésif chimique ou activé thermiquement et dont la résistance mécanique à la traction est fournie principalement par la liaison des fibres de la couche de surface obtenue par hydroliage. Ce mode de liaison est connu en soi ; il est désigné couramment par l'acronyme HEF de la désignation anglaise, « hydroentangled fabric ». Il consiste à faire traverser une nappe de fibres par des jets fins de liquide sous pression disposés en rangées perpendiculaires à la direction de déplacement de la nappe qui a été placée sur un support approprié mobile en translation. L'énergie des jets est suffisante pour que les fibres soient entremêlées et liées mécaniquement.

Selon une autre caractéristique de l'invention, chaque couche formée de fibres hydroliées a un grammage compris dans l'intervalle allant d'environ 10 à environ 80 g/m2, et de préférence d'environ 20 à environ 50 g/m2. La deuxième couche a un grammage compris dans l'intervalle allant d'environ 60 à environ 400 g/m2.

La présente invention porte également sur le procédé de fabrication d'un produit fibreux hydrophile comprenant les étapes suivantes :
La formation d'au moins deux nappes distinctes de fibres dont au moins une des nappes est réalisée, au moins en partie, à partir de fibres cellulosiques, notamment de coton,

Consolidation par liage au moyen de fins jets d'eau d'une première des dites nappes,

Superposition des nappes,

Traitement hydrophile par mouillage de la nappe complexe formée, suivi d'une extraction du liquide notamment par mise en dépression de ladite nappe complexe.

Le traitement de mouillage est réalisé par imprégnation d'un liquide tel que de l'eau, notamment par foulardage calandrage.

Plus particulièrement, la présente invention porte sur le procédé de fabrication d'un produit fibreux hydrophile comprenant les étapes suivantes :
a) formation d'au moins deux nappes distinctes de fibres dont l'une au moins est réalisée, au moins en partie, à partir de fibres cellulosiques naturelles écrues, notamment de coton,
b) consolidation par liage au moyen de fins jets d'eau d'une première des dites nappes,
c) superposition des deux nappes et
d) traitement hydrophile de la nappe complexe formée, suivi d'une extraction du liquide de traitement.

Une troisième nappe consolidée par liage au moyen de fins jets d'eau, peut être appliquée sur la deuxième nappe, le liquide de traitement hydrophile traversant les trois couches ainsi formées.

Le traitement hydrophile comprend une étape où au moins un des fluides de traitement, tel que le fluide de débouillissage, le fluide rinçage ou le fluide de blanchiment, est guidé de manière à traverser la nappe complexe d'une face à l'autre.

Avantageusement, le traitement hydrophile est de type continu où la nappe est entraînée successivement aux différents postes de traitement, les postes de traitement comprenant le mouillage par une solution de débouillissage, le chauffage, le rinçage et le blanchiment, au moins une partie des fluides de traitement étant appliquée sur la nappe par une face de manière à ce que le fluide la traverse et soit récupéré sur l'autre face.

On améliore la tenue de la nappe complexe en appliquant le liquide de traitement hydrophile par déversement d'une lame de liquide sur la nappe complexe. Plus particulièrement le déversement est associé à une aspiration par une dépression appliquée sur la face opposée.

Selon une variante de réalisation, on réalise au moyen des jets d'eau un motif, sur l'une ou l'autre des couches superficielles. Ce motif peut prendre l'aspect d'un filigrane ou être réalisé par perforation des voiles.

### Brève présentation des figures

D'autres caractéristiques et avantages de l'invention apparaîtront plus clairement à la lecture détaillée de la description qui suit en référence aux dessins annexés dans lesquels
- La figure 1 est une représentation schématique d'une installation permettant de fabriquer un produit conforme à l'invention,
- La figure 2 est une variante d'agencement de l'installation de la figure pour réaliser un autre produit conforme à l'invention.

### Description détaillée de modes de réalisation de l'invention

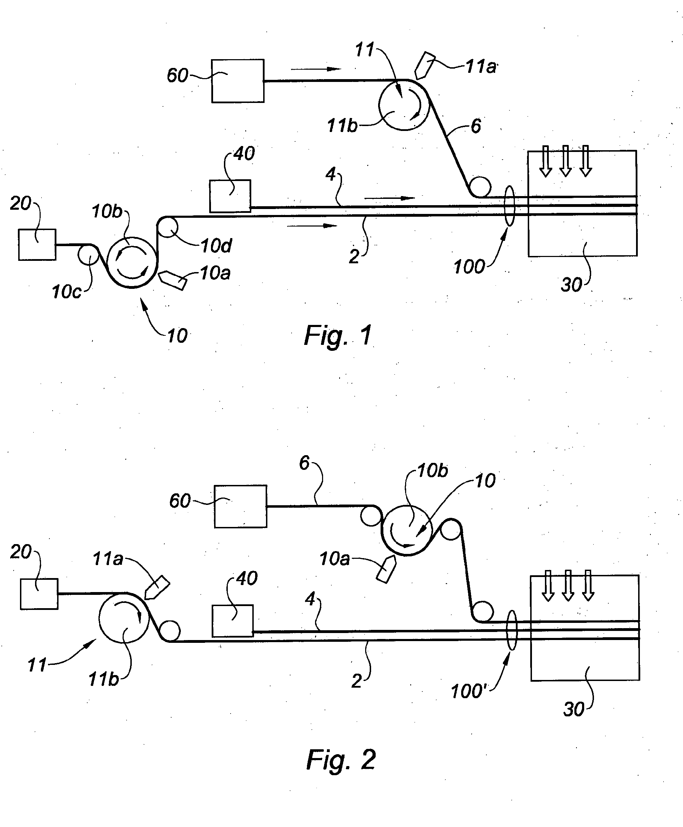

En se reportant à la figure 1, on voit le schéma général d'une installation qui permet la réalisation d'une nappe complexe 100 à partir de trois nappes de fibres. Il s'agit d'un exemple pour illustrer l'objet de l'invention, il n'est pas limitatif.

A l'amont se trouvent les postes 20, 40 et 60 de préparation des fibres et de leur mise en nappes. Lorsqu'il s'agit de coton, un mélange de fibres de coton de diverses origines et qualités subit un traitement d'ouvraison et de nettoyage puis les fibres sont nappées par des moyens mécaniques appropriés, tels que cardes ou nappeurs pneumatiques.

Dans la station amont 20, on forme une première nappe 2 avec un voile de carde obtenu par exemple au moyen d'une carde de coton classique, et de préférence au moyen d'une carde de type pêle-mêle connue en soi. La carde de type pêle-mêle est une machine mécanique qui se distingue par la sortie du voile, et qui permet aux fibres de n'être plus parallélisées dans le sens de production (voiles de fibres brouillées). Le terme carde de type pêle-mêle englobe ici aussi bien les cardes pêle-mêle classiques que des cardes pêle-mêle munies d'une sortie pneumatique, comme par exemple des cardes pêle-mêle commercialisées par Fehrer ou Erko. La station peut comprendre plusieurs machines et produire un voile formé d'une superposition de voiles.

Conformément à un mode de réalisation de l'invention, la première nappe est formée de fibres cellulosiques écrues, de coton notamment et est guidée jusqu'à un poste d'hydroliage 10 où elle est soumise à un traitement d'hydroliage. Ce traitement consiste à placer la nappe 2 sur un support poreux, tel qu'une grille formant la paroi cylindrique d'un tambour 10b mobile en rotation autour d'un axe fixe horizontal ; une ou plusieurs rangées de jets 10a formées d'une pluralité de fins jets d'eau sont dirigées vers la nappe en mouvement avec le support cylindrique 10b sur lequel elle est guidée par les rouleaux de guidage 10c et 10d. L'intérieur du cylindre est en dépression pour faciliter la traversée de la nappe par les jets d'eau.

Dans la mesure où les fibres sont écrues, il peut être nécessaire de traiter au préalable la nappe par un agent mouillant, tel qu'un tensio actif, pour faciliter le liage par les jets d'eau.

Parallèlement, une deuxième nappe 4 de fibres écrues est issue de la station 40 de formation de la nappe, celle-ci est de préférence obtenue par voie pneumatique, notamment sur une machine du type Rando ; il peut s'agir aussi de voiles de carde. Au moyen de cette dernière, les fibres sont projetées par un tambour garni de dents dans un courant d'air et sont aspirées sur un tapis ou tambour au travers duquel on crée une dépression. Les fibres sont réparties au hasard dans toutes les directions. Dans la pratique de l'invention, on observe une structure de type stratifié pour la couche sortie de cette machine. Les fibres de la couche déposée par voie pneumatique sont en effet orientées de manière sensiblement oblique par rapport aux plans inférieur et supérieur horizontaux de la nappe.

Une troisième nappe, issue d'une station de formation de nappe 6, est constituée d'un ou de plusieurs voiles de carde similaires à la première nappe. Elle est ainsi guidée jusqu'à une installation d'hydroliage 11 comparable à la première 10 avec un tambour poreux 11 b et une ou plusieurs rangées de buses délivrant de fins jets d'eau 11 a à haute énergie tournés vers la nappe placée sur le tambour 11 b.

On superpose les trois nappes et l'ensemble forme ainsi une nappe de type complexe 100 (nappe "sandwich"). Conformément à une variante de réalisation, une étape de séchage est prévue entre le traitement d'hydroliage et l'accostage des nappes.

Cette nappe est ensuite entraînée par un tapis support sans fin, perméable aux liquides, vers la station de traitement hydrophile 30 avec les différents postes de traitement en ligne continue. On imprègne la nappe en déversant par gravité une solution de débouillissage/mouillage contenant de la soude, sur la nappe, sous la forme d'une lame liquide transversale à la direction de déplacement de celle-ci. On crée au moyen d'une fente d'aspiration disposée sous la toile, une dépression suffisante pour permettre à au moins une partie de la solution de traverser la nappe. On contrôle en même temps la quantité de liqueur retenue par la nappe en réglant le vide créé au niveau de la fente aspirante. La nappe est ensuite introduite dans un vaporiseur chauffé à une température voisine de 100°C dans lequel elle séjourne, tout en restant continue, pendant le temps nécessaire au traitement, notamment fonction du débit matière (kg/h de coton).

Ensuite la nappe est rincée, le jus de débouillissage extrait au moyen d'une deuxième lame liquide et d'une fente à vide associée à un haut vide.

La nappe débouillie hydrophile est imprégnée, avec une solution de blanchiment contenant par exemple du chlorite, de l'hypochlorite de sodium ou de préférence de l'eau oxygénée, de la même manière que pour le traitement de débouillissage. Ensuite la nappe est introduite dans un vaporiseur chauffé à une température d'environ 100°C pour que le blanchiment soit effectif. On rince enfin la nappe au moyen d'une succession de lames liquides associées à des fentes aspirantes.

Ce traitement de la nappe confère une adhérence entre les couches la constituant et une très bonne cohésion à l'ensemble. Après séchage, cette nappe peut être utilisée directement.

Par le procédé, on obtient une bonne cohésion entre les couches et le peluchage est limité par le traitement par jets d'eau sous pression réalisé sur les couches supérieures, en amont du procédé. La perte en épaisseur est limitée car le traitement par jets d'eau sous pression n'a été appliqué qu'aux couches extérieures, la couche centrale de fort grammage ne subissant aucune contrainte autre que la traversée par les différents liquides de traitement hydrophile.

Conformément à une variante, on inverse les postes de traitement d'hydroliage, comme le voit sur la figure 2. La disposition pour le reste est inchangée. Dans ce cas, les faces des première et troisième nappes 2 et 6 qui reçoivent les jets d'eau sous pression sont disposées vers la deuxième nappe centrale 4. In s'ensuit que le peluchage des faces extérieures est limité par le traitement par les jets d'eau comme dans le cas précédant mais la face externe des première et troisième nappes n'a pas été soumise directement aux jets d'eau sous pression. Elle reste légèrement duveteuse. Cette configuration permet d'améliorer la douceur du produit final.

Pour la réalisation des nappes, on a utilisé des fibres cellulosiques écrues notamment de coton, pour les trois nappes. L'invention comprend le cas où seule une partie des nappes est formée de fibres écrues, l'autre partie pouvant être à base de fibres déjà blanchies.

Les nappes 2 et 6 sont de grammage compris entre 5 et 80 g/m².

La deuxième nappe est de grammage compris entre 60 et 400 g/m².

Des essais comparatifs ont été réalisés sur des produits de coton.

Nappes témoins T1, T2 T3: les nappes sont fabriquées selon le procédé décrit dans le brevet EP 0 805 888. Deux voiles de carde de 30 grammes chacun prennent en sandwich une nappe formée par voie pneumatique. Les nappes sandwich initialement écrues ont été traitement chimiquement puis rincées au moyen de jets d'eau à une pression respectivement de 25, 40 et 50 bars (2, 5, 4 et 5 MPa). Le rinçage conduit à un hydroliage des nappes.

Nappe de l'invention I : deux voiles de carde de fibres de coton écru ont été liés par jets d'eau à une pression de 40 bars (4 MPa), ils présentent une résistance, sens marche SM de 3,10 N et sens travers ST de 0,41 N. Les voiles liés sont associés en sandwich avec une nappe pneumatique. La nappe sandwich subit le traitement chimique de blanchiment avec rinçage tel que décrit en référence avec la figure 1.

Les mesures d'épaisseur et de résistance aussi bien sens marche que sens travers sont reportées dans le tableau ci-dessous.

On constate que seule la nappe de l'invention allie épaisseur et résistance et en particulier comme illustré dans le tableau ci-dessous en permettant d'améliorer la résistance à la traction avec une épaisseur équivalente à celle obtenue par le procédé classique. La nappe T1 a la même épaisseur mais une résistance plus faible que la nappe de l'invention. Pour obtenir une résistance au moins aussi grande, il faut une pression supérieure à 40 bars (4 MPa) mais alors l'épaisseur est plus faible.

| | **Grammage** | **Epaisseur** | **Gonflant** | **SM** | **ST** | **Décohésion** |
|---|---|---|---|---|---|---|
| | (g/m²) | (mm) | (mm) | (N) | (N) | (N) |
| **I** | **261** | **71** | **6,5** | **29,6** | **4,1** | **0,58** |
| **T1** | **262** | **69** | **7,1** | **14,3** | **5,7** | **0,62** |
| **T2** | **245** | **55** | **9** | **26** | **8** | **0,55** |
| **T3** | **260** | **59** | **7** | **40** | **13** | **0,65** |

Un test de douceur a été effectué selon le protocole décrit ci-après.

### Définition : test de douceur au toucher des tampons de coton secs

Les personnes qui effectuent ces tests sont des « experts », ils ont été validés pour pouvoir différencier différents niveaux de douceur ; ils participent régulièrement aux tests (une fois par mois). Le panel comporte au moins 10 participants pour être représentatif.

### Préparation des échantillons

Conditionnement: ouvrir les sachets au moins 12 heures à l'avance dans une pièce conditionnée : HR50% +/- 2 et 23°C +/-1
Description : il s'agit d'un test de comparaison de la douceur du coton entre deux échantillons.

La douceur est jugée par manipulation entre les doigts d'une même main, de façon à intégrer le glissant, le moelleux et la souplesse du tampon de coton. Résultats :
- une appréciation est donnée parmi vraiment moins doux, moins doux, un peu moins doux, idem, un peu plus doux, plus doux, vraiment plus doux.
- avec un adjectif ou un élément justifiant le choix : glissant moelleux, souple, rigide...

Selon ce test, le produit de l'invention comparé au témoin T1 sensiblement de même épaisseur est ressorti comme vraiment plus doux.

## Revendications

1. Produit fibreux absorbant contenant au moins 50 % de fibres de coton hydrophiles ou autres fibres cellulosiques hydrophiles et moins de 0,1% de liant chimique ou thermofusible, comprenant une première couche formée d'un non-tissé hydrolié et une deuxième couche formée de fibres plus faiblement liées entre elles que les fibres de la première couche, la liaison des fibres de la deuxième couche résultant d'un traitement hydrophile de la couche de fibres, les deux couches étant liées par adhérence toute surface entre les fibres des deux couches, et la force de décohésion étant d'au moins de 0,1 N.

2. Produit fibreux selon la revendication 1 dont la résistance à la traction est supérieure à 1N/25mm.

3. Produit fibreux selon l'une des revendications 1 et 2 dont la force de décohésion est inférieure à 1 N.

4. Produit fibreux selon l'une des revendications précédentes comprenant une troisième couche, formée de fibres hydroliées, du côté opposé à la première couche, les trois couches étant liées par adhérence toute surface entre les fibres des couches.

5. Produit fibreux selon l'une des revendications précédentes, la deuxième couche étant obtenue par voie pneumatique ou par superposition de voiles de carde et de grammage compris entre 60 et 400 g/m².

6. Produit fibreux selon l'une des revendications précédentes dont la première couche et/ou le cas échéant la troisième, est un voile ou une superposition de voiles de carde hydrolié, de grammage compris entre 10 et 80 g/m², de préférence entre 20 et 50 g/m².

7. Produit fibreux selon l'une des revendications précédentes dont au moins l'un des deux voiles de surface est marqué d'un motif obtenu par déplacement de fibres.

8. Procédé de fabrication d'un produit fibreux selon l'une des revendications précédentes, comprenant les étapes suivantes :
a. formation d'au moins deux nappes distinctes de fibres dont l'une au moins est réalisée, au moins en partie, à partir de fibres de coton ou d'autres fibres cellulosiques,
b. consolidation par liage au moyen de fins jets d'eau d'une première desdites nappes,
c. superposition des nappes et
d. traitement hydrophile par mouillage de la nappe complexe formée suivi d'une extraction du liquide notamment par mise en dépression de la nappe.

9. Procédé de fabrication selon la revendication précédente, comprenant les étapes suivantes :
a. formation d'au moins deux nappes distinctes de fibres dont l'une au moins est réalisée, au moins en partie, à partir de fibres cellulosiques naturelles écrues, notamment de coton,
b. consolidation par liage au moyen de fins jets d'eau d'une première desdites nappes,
c. superposition des deux nappes et
d. traitement hydrophile de la nappe complexe formée suivi d'une extraction du liquide de traitement.

10. Procédé de fabrication d'un produit fibreux selon la revendication 8 ou 9 comprenant la formation d'une troisième nappe consolidée par liage au moyen de fins jets d'eau, la superposition des trois nappes, les nappes consolidées étant extérieures et le traitement de la nappe complexe ainsi formée.

11. Procédé selon l'une des revendications 8 à 10, selon lequel on crée un motif sur les voiles de surface au moyen des jets d'eau.

12. Procédé selon la revendication 9 selon lequel le traitement hydrophile comprend au moins une étape où au moins un des fluides de traitement, tel que le fluide de débouillissage, le fluide rinçage ou le fluide de blanchiment, est guidé de manière à traverser la nappe complexe d'une face à l'autre,

13. Procédé selon la revendication précédente selon lequel le traitement hydrophile est de type continu où la nappe est entraînée successivement aux différents postes de traitement, les postes de traitement comprenant le mouillage par une solution de débouillissage, le chauffage, le rinçage et le blanchiment, au moins une partie des fluides de traitement étant appliquée sur la nappe par une face de manière à ce que le fluide la traverse et soit récupéré sur l'autre face.

14. Procédé selon la revendication 12, le fluide étant appliqué par déversement d'une lame de liquide sur la nappe complexe, le déversement étant notamment associé à une aspiration par une dépression appliquée sur la face opposée.

15. Procédé selon l'une des revendications 8 à 14 dont le traitement de consolidation par les jets d'eau comprend l'application desdits jets sur la face d'au moins l'une des première et deuxième nappes, formant une face extérieure de la nappe traitée de manière que ladite face extérieure soit résistante au peluchage.

16. Procédé selon l'une des revendications 8 à 14 dont le traitement de consolidation par les jets d'eau comprend l'application des dits jets d'eau sur la face d'au moins l'une des première et deuxième nappes formant une face tournée vers l'intérieur de la nappe traitée, de manière de la face opposée à ladite face soit duveteuse.

17. Procédé selon l'une des revendications 8 à 16 dont le traitement de consolidation par jets comprend une étape de pré mouillage avec ou sans un agent tensio actif.

## Patentansprüche

1. Aufsaugendes faserhaltiges Produkt, das mindestens 50 % an hydrophilen Baumwollfasern oder sonstigen hydrophilen cellulosehaltigen Fasern und weniger als 0,1 % an chemischem oder heißschmelzbarem Bindemittel enthält, wobei es eine erste Schicht umfasst, die aus einem wasserstrahlverfestigten Vliesstoff gebildet ist, sowie eine zweite Schicht, die aus Fasern gebildet ist, welche schwächer miteinander verbunden sind als die Fasern der ersten Schicht, wobei die Bindung der Fasern der zweiten Schicht durch eine hydrophile Behandlung der Faserschicht hervorgerufen wird, wobei die beiden Schichten durch ganzflächige Haftung zwischen den Fasern der beiden Schichten verbunden sind, und wobei zur Überwindung des Zusammenhalts eine Kraft von mindestens 0,1 N aufgewendet werden muss.

2. Faserhaltiges Produkt nach Anspruch 1, dessen Zugfestigkeit mehr als 1 N / 25 mm beträgt.

3. Faserhaltiges Produkt nach einem der Ansprüche 1 und 2, wobei zur Überwindung seines Zusammenhalts eine Kraft von weniger als 1 N aufgewendet werden muss.

4. Faserhaltiges Produkt nach einem der vorhergehenden Ansprüche, wobei es auf der Seite, die der ersten Schicht gegenüberliegt, eine dritte Schicht umfasst, welche aus wasserstrahlverfestigten Fasern gebildet ist, wobei die drei Schichten durch ganzflächige Haftung zwischen den Fasern der Schichten verbunden sind.

5. Faserhaltiges Produkt nach einem der vorhergehenden Ansprüche, wobei die zweite Schicht auf aerodynamischem Wege oder durch Übereinanderschichten von Kardenfloren mit einem Flächengewicht im Bereich von 60 bis 400 g/m² erhalten wird.

6. Faserhaltiges Produkt nach einem der vorhergehenden Ansprüche, wobei es sich bei dessen erster Schicht, und/oder gegebenenfalls der dritten, um einen Flor oder eine Übereinanderschichtung von wasserstrahlverfestigten Kardenfloren mit einem Flächengewicht im Bereich von 10 bis 80 g/m², vorzugsweise von 20 bis 50 g/m², handelt.

7. Faserhaltiges Produkt nach einem der vorhergehenden Ansprüche, wobei mindestens einer von dessen beiden Oberflächenfloren mit einem Motiv versehen ist, das durch Verschiebung von Fasern erhalten wird.

8. Verfahren zur Herstellung eines faserhaltigen Produkts nach einem der vorhergehenden Ansprüche, die folgenden Schritte umfassend:
a. Bilden von mindestens zwei verschiedenen Faservliesen, von denen mindestens eines zumindest teilweise aus Baumwollfasern oder sonstigen cellulosehaltigen Fasern hergestellt ist,
b. Verfestigen eines ersten der Vliese durch Verbinden mittels feiner Wasserstrahlen,
c. Übereinanderschichten der Vliese, und
d. Hydrophiles Behandeln, indem das erhaltene vielschichtige Vlies benetzt wird, woraufhin die Flüssigkeit entzogen wird, indem das Vlies einem Unterdruck ausgesetzt wird.

9. Herstellungsverfahren nach dem vorhergehenden Anspruch, welches die folgenden Schritte umfasst:
a. Bilden von mindestens zwei verschiedenen Faservliesen, von denen mindestens eines zumindest teilweise aus ungefärbten und ungebleichten natürlichen cellulosehaltigen Fasern, insbesondere aus Baumwolle, hergestellt ist,
b. Verfestigen eines ersten der Vliese durch Verbinden mittels feiner Wasserstrahlen,
c. Übereinanderschichten der beiden Vliese, und
d. Hydrophiles Behandeln des erhaltenen vielschichtigen Vlieses, woraufhin die Behandlungsflüssigkeit entzogen wird.

10. Verfahren zur Herstellung eines faserhaltigen Produkts nach Anspruch 8 oder 9, umfassend das Bilden eines dritten Vlieses, welches durch Verbinden mittels feiner Wasserstrahlen verfestigt ist, das Übereinanderschichten der drei Vliese, wobei die verfestigten Vliese außen liegen, und das Behandeln des auf diese Weise erhaltenen vielschichtigen Vlieses.

11. Verfahren nach einem der Ansprüche 8 bis 10, wobei auf den Oberflächenfloren mit Hilfe von Wasserstrahlen ein Motiv geschaffen wird.

12. Verfahren nach Anspruch 9, wobei die hydrophile Behandlung mindestens einen Schritt umfasst, in welchem mindestens eines der Behandlungsfluids, wie etwa das Beuchfluid, das Spülfluid oder das Bleichfluid, derart geleitet wird, dass es das vielschichtige Vlies von einer Seite zur anderen durchdringt.

13. Verfahren nach dem vorhergehenden Anspruch, wobei die hydrophile Behandlung kontinuierlicher Art ist, wobei das Vlies nacheinander zu den unterschiedlichen Behandlungsstationen befördert wird, wobei die Behandlungsstationen das Benetzen mit einer Beuchlösung, das Erhitzen, das Spülen und das Bleichen umfassen, wobei zumindest ein Teil des Behandlungsfluids von einer Seite aus derart auf das Vlies aufgebracht wird, dass das Fluid dieses durchdringt und auf der anderen Seite wieder aufgefangen wird.

14. Verfahren nach Anspruch 12, wobei das Fluid aufgebracht wird, indem ein Flüssigkeitsfilm auf dem vielschichtigen Vlies vergossen wird, wobei das Vergießen insbesondere in Verbindung mit einem Ansaugvorgang erfolgt, der bewirkt wird, indem ein Unterdruck an die gegenüberliegende Seite angelegt wird.

15. Verfahren nach einem der Ansprüche 8 bis 14, wobei im Rahmen der Verfestigungsbehandlung durch Wasserstrahlen die Strahlen derart auf die Seite mindestens eines der ersten und zweiten Vliese gerichtet werden, wobei diese eine Außenseite des behandelten Vlieses bildet, dass diese Außenseite widerstandsfähig gegen die Fusselbildung ist.

16. Verfahren nach einem der Ansprüche 8 bis 14, wobei im Rahmen der Verfestigungsbehandlung durch Wasserstrahlen die Wasserstrahlen derart auf die Seite mindestens eines der ersten und zweiten Vliese gelenkt werden, wobei diese eine Seite bildet, die zum Inneren des behandelten Vlieses gewandt ist, dass die dieser Seite gegenüberliegende Seite flauschig ist.

17. Verfahren nach einem der Ansprüche 8 bis 16, bei welchem die Verfestigungsbehandlung mittels Strahlen einen Schritt der Vorbenetzung mit der ohne Tensid umfasst.

## Claims

1. Absorbent fibrous product containing at least 50% of hydrophilic cotton fibres or other hydrophilic cellulose fibres and less than 0.1% of chemical or heat-fusible binder, comprising a first layer formed from a hydroentangled nonwoven and a second layer formed from fibres which are more weakly bonded to one another than the fibres in the first layer, the bonding of the fibres in the second layer resulting from a hydrophilic treatment of the layer of fibres, the two layers being bonded by full-surface adhesion between the fibres of the two layers, and the debonding force being at least 0.1 N.

2. Fibrous product according to claim 1, the tensile strength of which is greater than 1 N/25mm.

3. Fibrous product according to one of claims 1 and 2, the debonding force of which is less than 1 N.

4. Fibrous product according to one of the preceding claims, comprising a third layer, formed by hydroentangled fibres, on the side opposite the first layer, the three layers being bonded by full-surface adhesion between the fibres in the layers.

5. Fibrous product according to one of the preceding claims, the second layer being obtained pneumatically or by superimposing card webs and having a basis weight of between 60 and 400 g/m².

6. Fibrous product according to one of the preceding claims, wherein the first layer and/or, if applicable, the third layer is a web or a superposition of hydroentangled card webs with a basis weight of between 10 and 80 g/m², preferably between 20 and 50 g/m².

7. Fibrous product according to one of the preceding claims, wherein at least one of the two webs at the surface is marked with a pattern obtained by the displacement of fibres.

8. Method for the manufacture of a fibrous product according to one of the preceding claims, comprising the following steps:
a. forming at least two distinct strata of fibres, at least one of which is at least partly formed from cotton fibres or other cellulose fibres,
b. consolidating a first of said strata by bonding using fine water jets,
c. superimposing the strata and
d. hydrophilically treating the resulting complex stratum by wetting, followed by extraction of the liquid, notably by subjecting the stratum to negative pressure.

9. Manufacturing method according to the preceding claim, comprising the following steps:
a. forming at least two distinct strata of fibres, at least one of which is at least partly formed from fibres of untreated natural cellulose, particularly cotton,
b. consolidating a first of said strata by bonding using fine water jets,
c. superimposing the two strata and
d. hydrophilically treating the complex stratum formed, followed by extraction of the treatment liquid.

10. Method for the manufacture of a fibrous product according to claim 8 or 9, comprising the formation of a third stratum consolidated by bonding using fine water jets, superimposing the three strata, the consolidated strata being on the outside, and treating the complex stratum thus formed.

11. Method according to one of claims 8 to 10, wherein a pattern is created on the webs at the surface using jets of water.

12. Method according to claim 9, wherein the hydrophilic treatment comprises at least one step in which at least one of the treatment fluids, such as the scouring fluid, the rinsing fluid or the bleaching fluid, is guided so as to pass through the complex stratum from one side to the other.

13. Method according to the preceding claim, wherein the hydrophilic treatment is of the continuous type in which the stratum is conveyed to the different treatment stations in succession, the treatment stations comprising wetting with a scouring solution, heating, rinsing and bleaching, at least a proportion of the treatment fluids being applied to one side of the stratum so that the fluid passes through it and is recovered on the other side.

14. Method according to claim 12, the fluid being applied by pouring a pool of liquid onto the complex stratum, the pouring being combined in particular with aspiration by the application of negative pressure to the opposite side.

15. Method according to one of claims 8 to 14, wherein the consolidation treatment using the water jets comprises applying said jets to the surface of at least one of the first and second strata, forming an outer surface of the treated stratum so that said outer surface is resistant to linting.

16. Method according to one of claims 8 to 14, wherein the consolidation treatment using the water jets comprises applying said water jets to the surface of at least one of the first and second strata, forming an inward-facing surface of the treated stratum, so that the surface opposite said surface is downy.

17. Method according to one of claims 8 to 16, wherein the consolidation treatment using jets comprises a pre-wetting step with or without a surfactant.
